# EUROPEAN PATENT SPECIFICATION

(11) **EP 3 992 154 B1**
(45) Date of publication and mention of the grant of the patent: **30.10.2024**
(21) Application number: 21190782.9
(22) Date of filing: 11.08.2021
(51) Int. Cl.: C02F 1/32

(54) **FLUID STERILIZATION DEVICE**
FLÜSSIGKEITSSTERILISATIONSVORRICHTUNG
DISPOSITIF DE STÉRILISATION DE FLUIDE

(30) Priority: 29.10.2020 JP 2020181521; 29.06.2021 JP 2021107248
(43) Date of publication of application: 04.05.2022
(73) Proprietor: Toshiba Lighting & Technology Corporation, Yokosuka-shi, Kanagawa 237-8510 (JP)
(72) Inventor: ABE, Syuhei, Ehime (JP); KATO, Takeo, Ehime (JP)
(74) Representative: AWA Sweden AB

(56) References cited:
- CN-U- 210 117 304
- FR-B1- 2 835 517
- JP-A- 2020 157 187
- KR-A- 20170 116 549
- US-A1- 2012 235 059
- CRISTAL IS: "Biofouling Control Using UVC LEDs Using UV Reflective Materials to Maximize Disinfection Using UV Reflective Materials To Maximize Disinfection", 16 June 2016 (2016-06-16), pages 1 - 6, XP055870248, Retrieved from the Internet <URL:https://klaran.com/images/kb/application-notes/Using-UV-Reflective-Materials-to-Maximize-Disinfection---Application-Note---AN011.pdf> [retrieved on 20211207]

## Description

### FIELD

Embodiments described herein relate to a fluid sterilization device.

### BACKGROUND

There is a fluid sterilization device that irradiates a fluid such as water with ultraviolet rays to sterilize the fluid. For example, a fluid sterilization device is proposed which includes a tubular portion through which a fluid flows and a light source that is provided in an end portion of the tubular portion and irradiates the inside of the tubular portion with ultraviolet rays. In this case, the fluid flowing through the inside of the tubular portion is directly irradiated with a part of the ultraviolet rays emitted from the light source. In addition, the ultraviolet rays emitted from the light source and incident on an inner surface of the tubular portion propagate while being repeatedly reflected inside the tubular portion. A device according to the preamble of claim 1 is disclosed in JP 2020 157187 A.

Such a fluid sterilization device can also be used for sterilizing, for example, seawater, groundwater, or the like. By the way, seawater, groundwater, or the like contains a foreign substance such as sand, dead microorganisms, or inorganic salts. For this reason, when the fluid sterilization device is used for such an application, a foreign substance may adhere to a wetted portion of the fluid sterilization device, so that the sterilization effect is reduced.

For example, when a foreign substance adheres to the inner surface of the tubular portion, the reflectivity decreases. When the reflectivity decreases, the intensity of reflected light (ultraviolet rays) with which the fluid is irradiated also decreases, so that the sterilization effect is reduced. In addition, when a foreign substance adheres to a window provided between the light source and a flow path, a part of the ultraviolet rays emitted from the light source toward the fluid is blocked, so that the sterilization effect is reduced.

In this case, when the fluid sterilization device is disassembled and the adhering foreign substance is removed, it takes efforts and time, and the operating rate of the fluid sterilization device also decreases.

Therefore, the development of the fluid sterilization device capable of suppressing the adhesion of foreign substances is desired.

### DESCRIPTION OF THE DRAWINGS

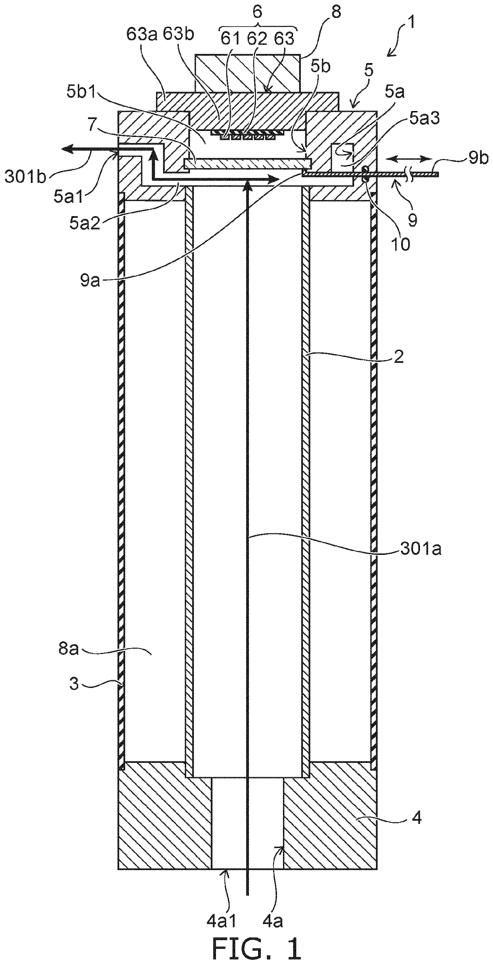

FIG. 1 is a schematic cross-sectional view illustrating a fluid sterilization device according to the embodiment.

### DETAILED DESCRIPTION

A fluid sterilization device according to the invention includes a tubular portion; a supply head provided in one end portion of the tubular portion; a discharge head provided in the other end portion of the tubular portion, and including a hole penetrating through the discharge head between an end face on a tubular portion side and an end face on a side opposite the tubular portion side; a substrate provided inside the hole of the discharge head; a light-emitting element provided on a surface on the tubular portion side of the substrate, and configured to emit an ultraviolet ray; and a window provided in the discharge head, and facing the light-emitting element, the tubular portion being made of stainless steel containing 8 wt% or more of nickel (Ni), seawater or groundwater to be sterilized coming into contact with an inner surface of the tubular portion, a surface roughness Ra of the inner surface of the tubular portion being 50 nanometers (nm) or less.

Hereinafter, an embodiment will be described with reference to the drawing. Incidentally, in the drawing, the same components are denoted by the same reference signs, and a detailed description thereof will be appropriately omitted.

FIG. 1 is a schematic cross-sectional view illustrating a fluid sterilization device 1 according to the invention.

As illustrated in FIG. 1, the fluid sterilization device 1 includes, for example, a tubular portion 2, a cover 3, a supply head 4, a discharge head 5, a light source 6, a window 7, a cooling unit 8, and a scraper 9.

The tubular portion 2 has a cylindrical shape, and end portions on both sides are open. The tubular portion 2 can be, for example, a cylindrical tube. Ultraviolet rays are emitted from the light source 6 to the inside of the tubular portion 2, and when a part of the emitted ultraviolet rays is transmitted through the tubular portion 2 to leak to the outside, the treatment capacity of the fluid sterilization device 1 decreases. For this reason, it is desirable that the tubular portion 2 is made of a material that does not transmit ultraviolet rays and has a high reflectivity to ultraviolet rays. For example, the tubular portion 2 can be made of a metal having a high reflectivity to ultraviolet rays.

When the material of the tubular portion 2 contains a metal having a high reflectivity to ultraviolet rays, ultraviolet rays incident on an inner surface of the tubular portion 2 are easily reflected toward a fluid 301a. For this reason, the utilization efficiency of ultraviolet rays emitted from the light source 6 can be improved. When the utilization efficiency of ultraviolet rays can be improved, the number of light-emitting elements 61 can be reduced. When the number of the light-emitting elements 61 is reduced, the size reduction, the cost reduction, the energy saving, and the like of the light source 6 can be achieved.

In addition, an internal space of the tubular portion 2 serves as a flow path of the fluid 301a to be sterilized. For this reason, the fluid 301a comes into contact with the inner surface of the tubular portion 2. Here, the fluid 301a is seawater or groundwater. For example, when seawater comes into contact with the inner surface of the tubular portion 2 of which the material contains a metal, corrosion may occur. For this reason, it is desirable that the tubular portion 2 is made of a metal having corrosion resistance to a liquid such as seawater which easily causes corrosion. According to the invention, the tubular portion 2 is made of stainless steel containing 8 wt% or more of nickel (Ni), the reflectivity to ultraviolet rays and corrosion resistance to a liquid such as seawater which easily causes corrosion can be improved. For example, SUS 304, SUS 316, or the like can be used as the stainless steel.

In addition, seawater, groundwater, or the like contains a foreign substance such as sand, dead microorganisms, or inorganic salts. Since the fluid 301a comes into contact with the inner surface of the tubular portion 2, when the fluid 301a contains a foreign substance, the foreign substance is likely to adhere to the inner surface of the tubular portion 2. When a foreign substance adheres to the inner surface of the tubular portion 2, the reflectivity to ultraviolet rays may decrease. When the reflectivity decreases, the intensity of reflected light (ultraviolet rays) with which the fluid 301a is irradiated decreases, so that the sterilization effect is reduced, which is a problem.

In this case, when the fluid sterilization device 1 is disassembled and the foreign substance adhering to the inner surface of the tubular portion 2 is removed, it takes efforts and time, and the operating rate of the fluid sterilization device 1 also decreases.

According to the findings obtained by the inventors, when the surface roughness (arithmetic average roughness) Ra of the inner surface of the tubular portion 2 is in a range of 50 nanometers (nm) or less and preferably in a range of 3 nanometers (nm) to 50 nanometers (nm), the adhesion of a foreign substance to the inner surface of the tubular portion 2 can be suppressed, and the reflectivity to ultraviolet rays can be improved. For example, the surface roughness Ra of the inner surface of the tubular portion 2 can be placed in the above numerical range by buffing the inner surface of the tubular portion 2.

The cover 3 has a cylindrical shape, and end portions on both sides are open. The cover 3 can be, for example, a cylindrical tube. The tubular portion 2 is stored in the internal space of the cover 3. The material of the cover 3 is not particularly limited as long as the material has a certain degree of rigidity. The material of the cover 3 can be, for example, a metal such as stainless steel. For example, the cover 3 can be fixed to the supply head 4 and the discharge head 5. A method for fixing the cover 3 is not particularly limited. For example, one end portion of the cover 3 can be provided inside a recessed portion or groove provided in the supply head 4, and the other end portion of the cover 3 can be provided inside a recessed portion or groove provided in the discharge head 5. In addition, for example, the end portions on both sides of the cover 3 may be provided with respective flanges. One flange may be fixed to the supply head 4 with screws or the like, and the other flange may be fixed to the discharge head 5 with screws or the like.

Incidentally, the cover 3 is not always required, and can also be omitted. Meanwhile, when the cover 3 is provided, an external force can be suppressed from being directly applied to the tubular portion 2.

The supply head 4 is provided in one end portion of the tubular portion 2. A seal member not illustrated can be provided between the supply head 4 and the end portion of the tubular portion 2. The seal member provides liquid-tight sealing between the supply head 4 and the tubular portion 2. The seal member can be, for example, an O-ring or the like.

The supply head 4 has, for example, a columnar shape, and includes a hole 4a penetrating through the supply head 4 between an end face on a tubular portion 2 side and an end face on a side opposite the tubular portion 2 side. An opening on the tubular portion 2 side of the hole 4a is connected to the internal space of the tubular portion 2. An opening on an opposite side of the hole 4a to the tubular portion 2 side serves as a supply port 4a1. A supply source of the fluid 301a can be connected to the supply port 4a1 via a pipe. In addition, a filter, a straightening plate, or the like can be provided inside the hole 4a.

The material of the supply head 4 is not particularly limited as long as the material has resistance to the fluid 301a and ultraviolet rays. The material of the supply head 4 can be, for example, a metal such as stainless steel. As described above, when the fluid 301a is a liquid such as seawater which easily causes corrosion, it is preferable that the supply head 4 is made of stainless steel containing 8 wt% or more of Ni. Thereby, even when seawater or the like is sterilized, corrosion can be suppressed from occurring in the supply head 4.

The discharge head 5 is provided in the other end portion of the tubular portion 2. A seal member not illustrated can be provided between the discharge head 5 and the end portion of the tubular portion 2. The seal member provides liquid-tight sealing between the discharge head 5 and the tubular portion 2. The seal member can be, for example, an O-ring or the like.

The discharge head 5 has, for example, a columnar shape, and includes a hole 5a and a hole 5b.

An opening on the tubular portion 2 side of the hole 5a is connected to the internal space of the tubular portion 2. An opening on an opposite side of the hole 5a to the tubular portion 2 side serves as a discharge port 5a1 provided in a side surface of the discharge head 5. A sterilized fluid 301b is discharged from the discharge port 5a1. A tank or the like that stores the sterilized fluid 301b can be connected to the discharge port 5a1 via a pipe.

In addition, the hole 5a is a bent flow path. The hole 5a includes a flow path 5a2 substantially parallel to an end face on the tubular portion 2 side of the discharge head 5, and a flow path 5a3 extending in an axial direction of the discharge head 5.

The flow path 5a2 is open to the end face on the tubular portion 2 side of the discharge head 5. In addition, the window 7 is exposed to an inner wall of the flow path 5a2. The flow path 5a2 is, for example, a disk-shaped space.

One end portion of the flow path 5a3 is connected to the vicinity of a peripheral edge of the flow path 5a2. The discharge port 5a1 is connected to the other end portion of the flow path 5a3. The flow path 5a3 is, for example, a cylindrical space.

Ultraviolet rays emitted from the light source 6 are incident on the flow path 5a2 via the window 7. For this reason, the fluid 301a flowing through the flow path 5a2 is sterilized by the ultraviolet rays. In addition, the internal space of the tubular portion 2 is irradiated with a part of the ultraviolet rays incident on the flow path 5a2. A part of the ultraviolet rays with which the internal space of the tubular portion 2 is irradiated is reflected on the inner surface of the tubular portion 2. For this reason, the fluid 301a flowing through the inside of the tubular portion 2 is sterilized by the ultraviolet rays.

The hole 5b is open to the end face on the opposite side of the discharge head 5 to the tubular portion 2 side, and the flow path 5a2. Namely, the discharge head 5 includes the holes (the hole 5b and the hole 5a) penetrating through the discharge head 5 between the end face on the tubular portion 2 side and the end face opposite the tubular portion 2 side.

For example, a protrusion portion 63b of a holder 63, a substrate 62, and the light-emitting element 61 are provided in the hole 5b.

The material of the discharge head 5 is not particularly limited as long as the material has resistance to the fluids 301a and 301b and ultraviolet rays. The material of the discharge head 5 can be, for example, a metal such as stainless steel. As described above, when the fluids 301a and 301b are a liquid such as seawater which easily causes corrosion, it is preferable that the discharge head 5 is made of stainless steel containing 8 wt% or more of Ni. Thereby, even when seawater or the like is sterilized, corrosion can be suppressed from occurring in the discharge head 5.

The light source 6 is detachably provided in the discharge head 5.
The light source 6 includes, for example, the light-emitting element 61, the substrate 62, and the holder 63.

The light-emitting element 61 is provided on a surface on the tubular portion 2 side of the substrate 62. The light-emitting element 61 emits ultraviolet rays toward the window 7. At least one light-emitting element 61 can be provided. When a plurality of the light-emitting elements 61 are provided, the plurality of light-emitting elements 61 can be connected in series to each other. The light-emitting element 61 is not particularly limited as long as the light-emitting element 61 is an element that generates ultraviolet rays. The light-emitting element 61 can be, for example, a light-emitting diode, a laser diode, or the like.

The peak wavelength of ultraviolet rays emitted from the light-emitting element 61 is not particularly limited as long as the peak wavelength has a sterilization effect. Meanwhile, when the peak wavelength is from 255 nm to 290 nm, the sterilization effect can be improved. For this reason, it is preferable that the light-emitting element 61 is capable of emitting ultraviolet rays of a peak wavelength of 255 nm to 290 nm.

The substrate 62 has a plate shape, and is provided on an end face on the tubular portion 2 side of the protrusion portion 63b. The substrate 62 can be provided with a wiring pattern. It is preferable that the material of the substrate 62 has resistance to ultraviolet rays. The material of the substrate 62 can be, for example, ceramics such as aluminum oxide. The substrate 62 can be a metal plate of which the surface is covered with an inorganic material (metal core substrate). When the material of the substrate 62 is ceramics or the like or the substrate 62 is a metal core substrate, resistance to ultraviolet rays and high thermal radiation can be obtained.

The holder 63 can be detachably provided in the discharge head 5. The light-emitting element 61 has a lifespan longer than that of a discharge lamp or the like, but when the lighting time is lengthened, the light-emitting efficiency decreases. In addition, it can be considered that the light-emitting element 61 cannot be lighted up due to a failure. When the holder 63 is detachably provided in the discharge head 5, the light-emitting element 61 can be easily replaced.

The holder 63 includes, for example, a flange 63a and the protrusion portion 63b. The flange 63a and the protrusion portion 63b can be integrally formed.

The flange 63a has a plate shape, and is provided on the end face on the opposite side of the discharge head 5 to the tubular portion 2 side. The flange 63a is attached to the discharge head 5 using, for example, a fastening member such as screws.

The protrusion portion 63b is provided in a surface on the tubular portion 2 side of the flange 63a. The protrusion portion 63b protrudes from one surface of the flange 63a, and is provided inside the hole 5b of the discharge head 5. The substrate 62 on which the light-emitting element 61 is mounted can be provided on the end face on the tubular portion 2 side of the protrusion portion 63b. In addition, the protrusion portion 63b can have a function of determining the position of the light-emitting element 61 with respect to the discharge head 5. For example, a side surface of the protrusion portion 63b can be in contact with an inner wall of the hole 5b of the discharge head 5. In this manner, the position of the light-emitting element 61 with respect to the discharge head 5 can be determined.

In addition, since the hole 5b and the flow path 5a2 of the discharge head 5 are partitioned off from each other by the window 7, even in a state where the fluid 301a is present in the flow path 5a2, the discharge head 5 (light source 6) can be attached and detached. For this reason, maintainability can be improved.

In addition, the holder 63 has a function of releasing heat, which is generated in the light-emitting element 61, to the outside. For this reason, it is preferable that the holder 63 is made of a material having a high thermal conductivity. The holder 63 can be made of, for example, a metal such as aluminum, copper, or stainless steel. In addition, thermal radiation fins can also be provided in an end face on a side opposite the tubular portion 2 side, a side surface, or the like of the holder 63.

The window 7 has a plate shape, and is liquid-tightly provided in the inner wall of the hole 5b of the discharge head 5. Namely, the window 7 is provided in the discharge head 5, and one surface of the window 7 is exposed to the flow path 5a2 provided in the discharge head 5. The planar shape of the window 7 can be, for example, a quadrilateral shape. When the planar shape of the window 7 is a quadrilateral shape, the scraper 9 can easily come into contact with the entire surface of the window 7. For this reason, the foreign substance adhering to the window 7 is easily removed.

The window 7 faces the light-emitting element 61. A space 5b1 can be provided between the window 7 and the light-emitting element 61. The window 7 can transmit ultraviolet rays, and is made of a material having resistance to ultraviolet rays and the fluid 301a. The window 7 is made of, for example, quartz or a fluororesin transmitting ultraviolet rays, or the like.

In addition, an antireflection film can also be provided on a surface on a light-emitting element 61 side of the window 7. When the antireflection film is provided, ultraviolet rays emitted from the light-emitting element 61 can be suppressed from being reflected by the window 7, thereby facilitating the irradiation of the fluid 301a. Namely, the utilization efficiency of the ultraviolet rays emitted from the light-emitting element 61 can be improved.

In addition, an antifouling film can also be provided on a surface on the tubular portion 2 side of the window 7. As described above, the fluid 301a may contain a foreign substance. When a foreign substance adheres to the window 7, the transmission of ultraviolet rays through the window 7 is difficult, the ultraviolet rays being emitted from the light-emitting element 61. When the antifouling film is provided, the adhesion of a foreign substance to the window 7 can be suppressed.

The cooling unit 8 can be provided, for example, on an opposite side of the holder 63 to the light-emitting element 61 side. The cooling unit 8 can be, for example, a fan that supplies air to the holder 63. When thermal radiation fins are provided in the holder 63, the cooling unit 8 can be a fan that supplies air to the thermal radiation fins. In addition, for example, the cooling unit 8 may supply a liquid to a flow path provided in the holder 63. Namely, the cooling unit 8 may be an air cooling type or a liquid cooling type.

Incidentally, the cooling unit 8 can also be omitted depending on the number or heat quantity of the light-emitting elements 61 and the temperature, flow rate, or the like of the fluid 301a. Meanwhile, when the cooling unit 8 is provided, even when the number, applied electric power, or the like of the light-emitting elements 61 is increased, the temperature of the light-emitting element 61 is unlikely to exceed the maximum junction temperature.

In addition, when the cooling unit 8 is provided, even when the temperature of the fluid 301a increases or the flow rate of the fluid 301a of a high temperature increases, the temperature of the light-emitting element 61 is unlikely to exceed the maximum junction temperature. For this reason, the range of the fluid 301a, which can be handled, can be expanded.

Here, since the fluid 301a comes into contact with the surface on the tubular portion 2 side of the window 7, when the fluid 301a contains a foreign substance, the foreign substance is likely to adhere to the surface on the tubular portion 2 side of the window 7. When a foreign substance adheres to the window 7, ultraviolet rays emitted from the light source 6 are unlikely to be incident on the flow path 5a2. For this reason, the sterilization effect is reduced, which is a problem.

As described above, when the antifouling film is provided on the surface on the tubular portion 2 side of the window 7, the adhesion of a foreign substance can be suppressed. However, even when the antifouling film is provided, when the amount of a foreign substance contained in the fluid 301a is large, suppressing the adhesion of the foreign substance may be difficult.

In this case, when the fluid sterilization device 1 is disassembled and the foreign substance adhering to the window 7 is removed, it takes efforts and time, and the operating rate of the fluid sterilization device 1 also decreases.

Therefore, the fluid sterilization device 1 is provided with the scraper 9 that removes the foreign substance adhering to the window 7.

The scraper 9 can be provided in the discharge head 5. A seal member 10 can be provided between the scraper 9 and the discharge head 5. The seal member 10 provides liquid-tight sealing between the scraper 9 and the discharge head 5.

The scraper 9 is movable along the surface of the window 7 in a state where the scraper 9 is in contact with the surface on the tubular portion 2 side of the window 7. For example, one end portion 9a of the scraper 9 can be in contact with the surface on the tubular portion 2 side of the window 7. For example, the other end portion 9b of the scraper 9 can be exposed from the discharge head 5. For example, the scraper 9 is movable in a direction orthogonal to a central axis of the tubular portion 2.

When such a scraper 9 is provided, the scraper 9 is capable of scraping a foreign substance adhering to the window 7.

For example, the movement of the scraper 9 may be performed by a worker or may be performed by using a drive device such as a motor or an air cylinder. For example, the removal of a foreign substance by the scraper 9 can be performed according to the amount of the adhering foreign substance, or can be performed periodically.

The material of the scraper 9 is not particularly limited as long as the material has resistance to the fluid 301a and ultraviolet rays. The material of the scraper 9 can be, for example, a metal such as stainless steel. As described above, when the fluid 301a is a liquid such as seawater which easily causes corrosion, it is preferable that the scraper 9 is made of stainless steel containing 8 wt% or more of Ni. Thereby, even when seawater or the like is sterilized, corrosion can be suppressed from occurring in the scraper 9.

While certain embodiments have been described, these embodiments have been presented by way of example only, and are not intended to limit the scope of the inventions. Indeed, the novel embodiments described herein may be embodied in a variety of other forms. The accompanying claims are intended to cover such forms or modifications as would fall within the scope of the inventions. Moreover, above-mentioned embodiments can be combined mutually and can be carried out.

## Claims

1. A fluid sterilization device (1) comprising:
a tubular portion (2);
a supply head (4) provided in one end portion of the tubular portion (2);
a discharge head (5) provided in the other end portion of the tubular portion (2), and including a hole (5b) penetrating through the discharge head (5) between an end face on a tubular portion (2) side and an end face on a side opposite the tubular portion (2) side;
a substrate (62) provided inside the hole (5b) of the discharge head (5);
a light-emitting element (61) provided on a surface on the tubular portion (2) side of the substrate (62), and configured to emit an ultraviolet ray; and
a window (7) provided in the discharge head (5), and facing the light-emitting element (61), **characterised in**:
the tubular portion (2) being made of stainless steel containing 8 wt% or more of nickel (Ni),
seawater or groundwater to be sterilized coming into contact with an inner surface of the tubular portion (2),
a surface roughness Ra of the inner surface of the tubular portion (2) being 50 nanometers (nm) or less.

2. The device (1) according to claim 1, further comprising:
a scraper (9) that is movable along a surface of the window (7) in a state where the scraper (9) is in contact with the surface on an opposite side of the window (7) to a light-emitting element (61) side.

## Patentansprüche

1. Flüssigkeitssterilisationsvorrichtung (1), umfassend:
einen röhrenförmigen Abschnitt (2);
einen Zuführkopf (4), der an einem Endabschnitt des röhrenförmigen Abschnitts (2) vorgesehen ist;
einen Ausstoßkopf (5), der an dem anderen Endabschnitt des röhrenförmigen Abschnitts (2) vorgesehen ist und ein Loch (5b) aufweist, das den Ausstoßkopf (5) zwischen einer Endfläche auf einer Seite des röhrenförmigen Abschnitts (2) und einer Endfläche auf einer Seite, die der Seite des röhrenförmigen Abschnitts (2) gegenüberliegt, durchdringt;
ein Substrat (62), das innerhalb des Lochs (5b) des Ausstoßkopfs (5) vorgesehen ist;
ein lichtemittierendes Element (61), das auf einer Fläche auf der Seite des röhrenförmigen Abschnitts (2) des Substrats (62) vorgesehen ist und so ausgebildet ist, dass es einen Ultraviolettstrahl emittiert; und
ein Fenster (7), das im Ausstoßkopf (5) vorgesehen ist und dem lichtemittierenden Element (61) zugewandt ist, **dadurch gekennzeichnet, dass**:
der röhrenförmige Abschnitt (2) aus rostfreiem Stahl mit 8 Gew.-% oder mehr Nickel (Ni) besteht,
zu sterilisierendes Meerwasser oder Grundwasser mit einer Innenfläche des röhrenförmigen Abschnitts (2) in Kontakt kommt,
eine Flächenrauheit Ra der Innenfläche des röhrenförmigen Abschnitts (2) 50 Nanometer (nm) oder weniger beträgt.

2. Vorrichtung (1) nach Anspruch 1, ferner umfassend:
einen Schaber (9), der sich entlang einer Fläche des Fensters (7) bewegen kann, während der Schaber (9) mit der Fläche auf einer der Seite des Fensters (7), die der Seite des lichtemittierenden Elements (61) gegenüberliegt, in Kontakt steht.

## Revendications

1. Dispositif de stérilisation de fluide (1) comprenant :
une partie tubulaire (2) ;
une tête d'alimentation (4) prévue dans une partie d'extrémité de la partie tubulaire (2) ;
une tête d'éjection (5) prévue dans l'autre partie d'extrémité de la partie tubulaire (2) et comprenant un orifice (5b) pénétrant à travers la tête d'éjection (5) entre une face d'extrémité sur un côté de partie tubulaire (2) et une face d'extrémité sur un côté opposé au côté de partie tubulaire (2) ;
un substrat (62) prévu à l'intérieur de l'orifice (5b) de la tête d'éjection (5) ;
un élément émetteur de lumière (61) prévu sur une surface sur le côté de partie tubulaire (2) du substrat (62) et configuré afin d'émettre un rayon ultraviolet ; et
une fenêtre (7) prévue dans la tête d'éjection (5) et faisant face à l'élément émetteur de lumière (61), **caractérisé en ce que** :
la partie tubulaire (2) est constituée d'acier inoxydable contenant 8% en poids ou plus de nickel (Ni),
de l'eau de mer ou de l'eau souterraine à stériliser venant en contact avec une surface intérieure de la partie tubulaire (2),
une rugosité de surface Ra de la surface intérieure de la partie tubulaire (2) étant de 50 nanomètres (nm) ou moins.

2. Dispositif (1) selon la revendication 1, comprenant en outre :
un racloir (9) qui est mobile le long d'une surface de la fenêtre (7) dans un état où le racloir (9) est en contact avec la surface sur un côté opposé de la fenêtre (7) vers un côté d'élément émetteur de lumière (61).
